(19) Europäisches Patentamt
European Patent Office
Office européen des brevets

(11) Publication number: **0 109 014**
**B1**

(12) **EUROPEAN PATENT SPECIFICATION**

(45) Date of publication of patent specification: **22.07.87**

(51) Int. Cl.$^4$: **C 07 F 7/28**

(21) Application number: **83111027.5**

(22) Date of filing: **04.11.83**

# (54) Titanium ester compositions having depressed freezing points.

(30) Priority: **05.11.82 US 439567**

(43) Date of publication of application:
**23.05.84 Bulletin 84/21**

(45) Publication of the grant of the patent:
**22.07.87 Bulletin 87/30**

(84) Designated Contracting States:
**AT BE CH DE FR GB IT LI LU NL SE**

(56) References cited:
**EP-A-0 035 649**
**GB-A- 869 988**
**US-A-3 682 688**

(73) Proprietor: **E.I. DU PONT DE NEMOURS AND COMPANY**
**1007 Market Street**
**Wilmington Delaware 19898 (US)**

(72) Inventor: **Robbins, Gordon Bradbury**
**P.O. Box 194**
**Edison Nebraska 68936 (US)**

(74) Representative: **Abitz, Walter, Dr.-Ing. et al**
**Abitz, Morf, Gritschneder, Freiherr von Wittgenstein Postfach 86 01 09**
**D-8000 München 86 (DE)**

**EP 0 109 014 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

Background of the invention

The present invention relates to a reaction product of a titanium ester and 2,4-pentanedione which has been modified so as to lower its freezing point.

It has long been known that titanium esters react with high molecular weight hydroxyl-containing compounds so as to cross-link them and produce gels; J. Oil and Colour Chem. Assoc. 31, 405 (1948). However, the cross-linking reaction made through the use of simple alkyl esters of titanium proceeds too rapidly for most industrial uses. The cross-linking rate imparted by titanium esters can be depressed by combining a titanium ester with a variety of multifunctional compounds including 2,4-pentanedione (also known as acetylacetone); U.S. Patent 2,680,108. It should be noted that there is disagreement as to the structure of the complexes or chelates so-formed; cf. the structure given in the patent with that given by Yamamoto et al., J.A.C.S. 79 (1957), 4344-8.

The reaction product of tetraisopropyl titanate (also known as tetraisopropoxytitanium) and 2,4-pentanedione, at a titanate:pentanedione mol ratio of 1:2, finds several industrial uses. Among others, that reaction product is used to cross-link high molecular weight compounds (e.g., hydroxypropyl guar gum), and the cross-linked high molecular material is used to fracture oil-bearing formations. That reaction product is normally a liquid, and sometimes it remains in the liquid state even after having been supercooled to some considerable extent.

However, in the supercooled state, it sometimes spontaneously freezes, especially in the presence of a nucleating agent, such as dust or a part of the reaction product in crystal form. The reaction product of tetraisopropyl titanate and 2,4-pentanedione at a 1:1 mol ratio has an even greater tendency to freeze.

In U.S. Patent 4,313,851, it is proposed that the addition of a small amount of water will inhibit crystallization of the reaction product of one mol of tetraisopropyl titanate with two mols of 2,4-pentanedione. The technique used in that patent results in hydrolysis of that reaction product, liberating isopropyl alcohol. In any event, that technique did not prevent freezing in the presence of a nucleating agent.

Summary of the invention

The present invention provides a titanium composition, the freezing point of which has been depressed without adversely affecting its utility in cross-linking high molecular weight compounds. The present invention also provides processes by which to prepare the compositions of the present invention. The composition of the present invention comprises the reaction product of a titanium ester with 2,4-pentanedione and either at least one other titanium ester or at least one alcohol which provides an alkoxy radical differing from that present in the original titanium ester.

Detailed description of the invention

In particular, the composition of the present invention comprises a reaction product with a depressed freezing point obtained by combining (i) a titanate represented by the empirical formula

$$(R^1O)_4Ti$$

with (ii) 2,4-pentanedione and (iii) a substance which is either

(a) at least one other titanate represented by the empirical formula

$$(R^2O)_4Ti$$

or

(b) at least one alcohol represented by the empirical formula

$$R^3OH$$

wherein the titanate:pentanedione mol ratio is in the range between 1:1 and 1:2;

$R^2$ and $R^3$ differ from $R^1$; and

$R^1$, $R^2$ and $R^3$ are each methyl, ethyl, 2-chloroethyl, isopropyl, n-propyl, n-butyl, n-pentyl, 2-pentyl, 3-methylbutyl, 2-methoxyethyl, or methoxyethoxyethyl.

The preferred reaction product is that obtained by combining a tetraalkyl titanate with 2,4-pentanedione, at a titanate:pentanedione mol ratio between 1:1 and 1:2, and one or more alcohols. In one such embodiment, tetraisopropyl titanate is reacted with 2,4-pentanedione, at a mol ratio between 1:1 and 1:2; all or part of the isopropanol thereby generated is removed by distillation, and one or more of the $R^3OH$ alcohols other than isopropanol is added to the reaction product. The concentration of titanium in the final product is preferably substantially the same as in the reaction product of the first-mentioned titanium ester and 2,4-pentanedione.

In a more preferred embodiment, tetraisopropyl titanate is reacted with 2,4-pentanedione, at a titanate:pentanedione mol ratio of 1:2; all or part of the isopropanol thereby generated is removed by distillation and a mixture of methanol and n-butanol is added in a quantity sufficient on a molar basis to

replace the isopropanol which has been removed. The reaction products thereby obtained contain methoxy, isopropoxy and n-butoxy substituents in the proportions, in mol percentages, shown for the liquid products identified in the Figure; i.e., the area UVWXYZ (Yamamoto et al., supra, report tetra-n-butyl titanate to be noncrystalline). The most preferred composition is that which contains about 51 mol % isopropoxy, about 15 mol % n-butoxy and about 34 mol % methoxy (Example 1). In similar embodiments, one can substitute other titanates for tetraisopropyl titanate, e.g., tetramethyl titanate (sometimes called titanium methoxide) or tetra-n-butyl titanate, and alcohols other than methanol or n-butanol respectively.

The reaction of $(R^1O)_4Ti$ and one or more $(R^2O)_4Ti$ with 2,4-pentanedione is exothermic. The reaction can be run at a temperature between room temperature and reflux temperature; i.e., about 20°—85°C. If one wishes to conduct the reaction at the lower end of that temperature range, one may do it either by providing a cooling means or by adding the titanate to the pentanedione at a slow enough rate that the temperature remains in the lower portion of the range, e.g., 20°—50°C. All or part of $R^1OH$ and optionally $R^2OH$, liberated in that reaction, are removed. When that reaction product is to be reacted with one or more $R^3OH$, usually the amount of $R^1OH$ that is removed is substantially the same on a molar basis as the amount of $R^3OH$ being used. Most often the $R^1OH$ will be removed before adding $R^3OH$. However, it is not always necessary to do so; e.g., one can remove $R^1OH$ by distillation if the boiling point of $R^3OH$ is sufficiently higher than that of $R^1OH$.

In attempting to modify the reaction product of the titanate and pentanedione so as to lower its freezing point, one is hampered by the tendency of such compositions to supercool for long periods of time without showing any tendency to freeze. Only by exposing the modified reaction product to lower temperature in the presence of seed crystals can one be certain that the freezing point of the modified reaction product has truly been reduced significantly.

In the examples that follow the compositions of the invention are characterized as to mol percentage alkoxy content and temperature characteristics. The former is obtained by calculating the mol percentage of each individual alkoxy radical in the sum of the mols of alkoxy radicals provided by $(R^1O)_4Ti$ and $(R^2O)_4Ti$ or by $(R^1O)_4Ti$ and $R^3OH$. The latter is determined by holding the compositions at about −25°C for at least 4 hours, and usually overnight (about 16 hours), and thereafter seeding an aliquot of the composition with crystals of the reaction product of $(R^1O)_4Ti$ and 2,4-pentanedione, and sometimes additionally with crystals of the reaction product of $(R^2O)_4Ti$ and 2,4-pentanedione. Thereafter, the compositions are inspected periodically to determine whether the composition has frozen, and if so, how long after seeding it occurred. If a composition freezes at −25°C, it is then observed at +2°C and, if necessary, at room temperature (20°—25°C) to determine if and when it becomes liquid.

Example 1

A flask, vented through a reflux condenser and a bubble trap, was provided with a nitrogen atmosphere so as to exclude atmospheric moisture. To the flask were added 802 g of 2,4-pentanedione (about 8 mols). Taking care so as to give minimal exposure to atmospheric moisture, 1136 g of tetraisopropyl titanate (about 4 mols) were transferred to a dropping funnel having a pressure equalizing tube, and from that dropping funnel with stirring to the flask. The titanate was added slowly to the 2,4-pentanedione so as to maintain the temperature in the range between 20° and 50°C. After stirring for one hour, the reaction product was transferred to a single neck flask and isopropanol was removed by distillation to a final condition of 40°C and 53 mbar so as to give a final weight of 1460 g (had all of the isopropanol been removed, a product weighing about 1458 g would have been obtained). A 200 g quantity each of methanol (about 6.25 mols) and n-butanol (about 2.7 mols) were added to the distilled product along with 72 g of isopropanol (about 1.2 mols) to give a composition having a density of 1.015 at 20°C. Of the total alkoxy substituents in that composition, about 34 mol percent were methoxy; about 51 mol percent were isopropoxy and about 15 mol percent were n-butoxy. When seeded and tested as described above at −25°C, no freezing was evident, even after 21 days. The temperature characteristics of the composition of this Example 1 are also illustrated in the Figure.

Example 2

Compositions were prepared by the technique of Example 1 with the following modifications. Upon distilling to a final condition of 40°C and 53 mbar, the weight of the resulting composition was 1460 g. That composition was divided into aliquots of 91.2 g containing 0.25 mol of titanium. To one aliquot was added 30 g of isopropanol so as to provide a control. All other aliquots were made up to 121.2 g by the addition of various alcohols (each aliquot was made up to 9.9 weight percent titanium, the titanium content of Du Pont's Tyzor® AA reaction product of one mol of tetraisopropyl titanate and 2 mols of 2,4-pentanedione). The aliquots were cooled to about −25°C and seeded with solid particles of the reaction product of one mol of tetraisopropyl titanate and 2,4-pentanedione (1:2 titanate:pentanedione mol ratio). Aliquots having a methoxy content were additionally seeded with solid particles of the reactoin product of tetramethyl titanate and 2,4-pentanedione (1:2 mol ratio). After being exposed at −25°C for about ten days, samples were examined. Solid samples were thereafter exposed to +2°C for several days and then at room temperature (20°—25°C). Table I sets forth the composition of the aliquots in terms of their mol percentage alkoxy content and describes their condition at various temperatures.

TABLE I

| Example (aliquot) | Alkoxy content | Temperature characteristics −25°C | +2°C | Room temperature |
|---|---|---|---|---|
| 2(A) | 35% Isopropoxy—65% Methoxy | Solid | Solid | 95 Vol. % Fluid |
| 2(B) | 62% Isopropoxy—38% Methoxy | Fluid | — | — |
| 2(C) | 43% Isopropoxy—57% Ethoxy | Fluid | — | — |
| 2(D) | 70% Isopropoxy—30% Ethoxy | 60 Vol. % Solid | 95 Vol. % Fluid | Fluid |
| 2(E) | 50% Isopropoxy—50% n-Propoxy | Solid | 95 Vol. % Fluid | Fluid |
| 2(F) | 55% Isopropoxy—45% n-Butoxy | Solid | Fluid | — |
| 2(G) | 79% Isopropoxy—21% n-Butoxy | Solid | Fluid | — |
| 2(H) | 43% Isopropoxy—17% n-Butoxy-40% Methoxy | Fluid | — | — |
| 2(I) | 69% Isopropoxy—9% n-Butoxy-22% Methoxy | Fluid | — | — |
| 2(J) | 74% Isopropoxy—10% n-Butoxy-16% Ethoxy | Solid | Fluid | — |
| Control | 100% Isopropoxy | Solid | 90 Vol. % Solid | Fluid |

Example 3

In accordance with the technique described for the preceding examples, 568 g of tetraisopropyl titanate (about 2 mols) were combined with 200 g of 2,4-pentanedione (about 2 mols) and distilled to a weight of 708 g. The resulting composition was divided into 8 aliquots and diluted with various alcohols to 121.5 g. The percentage alkoxy content in each of the aliquots and their temperature characteristics are shown in Table II.

TABLE II

| Example (aliquot) | Alkoxy content | Temperature characteristics −25°C | +2°C | Room temperature |
|---|---|---|---|---|
| 3(A) | 42% Isopropoxy—58% Methoxy | Fluid | — | — |
| 3(B) | 51% Isopropoxy—49% Ethoxy | Solid | Solid | 50 Vol. % Fluid |
| 3(C) | 58% Isopropoxy—42% n-Propoxy | Solid | Solid | 90 Vol. % Solid |
| 3(D) | 63% Isopropoxy—37% n-Butoxy | 90 Vol. % Fluid | 95 Vol. % Fluid | Fluid |
| 3(E) | 67% Isopropoxy—33% n-Pentoxy | Solid | Solid | 85 Vol. % Fluid |
| 3(F) | 50% Isopropoxy—35% Methoxy-15% n-Butoxy | Fluid | — | — |
| 3(G) | 63% Isopropoxy—29% Methoxy-8% n-Butoxy | Fluid | — | — |
| 3(H) | 80% Isopropoxy—11% Methoxy-9% n-Butoxy | 97 Vol. % Fluid | Trace Solid | Fluid |
| Control | 100% Isopropoxy | Solid | Solid | 85 Vol. % Fluid |

Example 4

With minimum exposure to atmospheric moisture, 17.2 g of tetramethyl titanate (about 0.1 mol), 34.0 g of tetra-n-butyl titanate (about 0.1 mol) and 28.4 g of tetraisopropyl titanate (about 0.1 mol) were mixed in a flask provided with an agitator, thermometer and nitrogen inlet. Thereafter, 60 g of 2,4-pentanedione (about 0.6 mol) were added, stirred for 1 hour at 40°—50°C and filtered to remove a faint haze. The resulting composition contained 33-1/3 mol percent of each of methoxy, isopropoxy and n-butoxy substituents.

Example 5

Example 4 was repeated with 25.8 g of tetramethyl titanate (about 0.15 mol), 51 g of tetra-n-butyl titanate (about 0.15 mol) and 60 g of 2,4-pentanedione (about 0.6 mol) to give a composition containing 50 mol percent of each of methoxy and n-butoxy substituents.

A control for the compositions of Examples 4 and 5 was prepared by reacting 200 g of 2,4-pentanedione (about 2 mols) with 284 g of tetraisopropyl titanate (about 1 mol).

Aliquots of the composition of Examples 4 and 5 and of the control for them were seeded with crystals of the reaction product of 2,4-pentanedione and tetraisopropyl titanate (2:1 mol ratio). The aliquot of the composition of Example 4 was also seeded with the reaction product of 2,4-pentanedione and tetramethyl titanate (2:1 mol ratio). The compositions of Examples 4 and 5 gave no crystallization after 2 weeks at −25°C. That of the control crystallized within 3 hours after seeding.

Example 6

To 142 g (about 0.5 mol) of tetraisopropyl titanate were added 100 g (about 1 mol) of 2,4-pentanedione and 120 g (about 1 mol) of methylcarbitol (the monomethyl ether of diethylene glycol). The composition was distilled to a final condition of 50°C and 13 mbar to give a final weight of 248 g.

Example 7

The procedure of Example 6 was repeated; however, 240 g (about 2 mols) of methylcarbitol were used and distillation provided a final weight of 367 g.

Example 8

The procedure of Example 6 was repeated; however, 60 g (about 0.6 mol) of 2,4-pentanedione were used and 40 g (about 0.33 mol) of methylcarbitol to give a final weight of 242 g.

Example 9

Example 8 was repeated; however, 100 g (about 0.83 mol) of methylcarbitol were used and distillation was continued to a final weight of 216 g.

To serve as a control for Examples 6—9, Example 6 was repeated; however, no methylcarbitol was used.

Aliquots of the compositions of Examples 6—9 and of the control were seeded at −25°C with crystals of the reaction product of 1 mol of tetraisopropyl titanate and 2 mols of 2,4-pentanedione. When the aliquots were checked 2 days later, the control was frozen solid; there was no evidence of crystals in the compositions of Examples 6, 7 and 9 while the composition of Example 8 was about 90 volume percent liquid. When those same aliquots were again checked 6 days later, substantially no change had taken place.

**Claims**

1. A composition comprising a reaction product with a depressed freezing point obtained by combining (i) a titanate represented by the empirical formula

$$(R^1O)_4Ti$$

with (ii) 2,4-pentanedione and (iii) a substance which is either

(a) at least one other titanate represented by the empirical formula

$$(R^2O)_4Ti$$

or

(b) at least one alcohol represented by the empirical formula

$$R^3OH$$

wherein the titanate:pentanedione mol ratio is in the range between 1:1 and 1:2;

$R^2$ and $R^3$ differ from $R^1$; and

$R^1$, $R^2$ and $R^3$ are each methyl, ethyl, 2-chloroethyl, isopropyl, n-propyl, n-butyl, n-pentyl, 2-pentyl, 3-methylbutyl, 2-methoxyethyl, or methoxyethoxyethyl.

2. The composition of Claim 1 wherein the titanate represented by the empirical formula

$$(R^1O)_4Ti$$

is tetraisopropyl titanate.

3. The composition of Claims 1 or 2 wherein the substance of the empirical formula

$$R^3OH$$

comprises methanol, ethanol, n-butanol or a mixture of methanol and n-butanol.

4. The composition of Claims 1 to 3 containing methoxy, isopropoxy and n-butoxy substituents in the molar proportions defined by the area UVWXYZ in the Figure.

5. The composition of Claim 4 which contains about 51 mol % isopropoxy, about 15 mol % n-butoxy and about 34 mol % methoxy substituents.

6. The composition of Claim 1 in which the $(R^1O)_4Ti$:2,4-pentanedione mol ratio is 1:2.

7. The process of preparing the reaction product of Claim 1 which comprises reacting (i) a titanate represented by the empirical formula

$$(R^1O)_4Ti$$

with (ii) 2,4-pentanedione and (iii) a substance which is either

(a) at least one other titanate represented by the empirical formula

$$(R^2O)_4Ti$$

or

(b) at least one alcohol represented by the empirical formula

$$R^3OH$$

wherein the titanate:pentanedione mol ratio is in the range between 1:1 and 1:2;

$R^2$ and $R^3$ differ from $R^1$; and

$R^1$, $R^2$ and $R^3$ are each methyl, ethyl, 2-chloroethyl, isopropyl, n-propyl, n-butyl, n-pentyl, 2-pentyl, 3-methylbutyl, 2-methoxyethyl, or methoxyethoxyethyl.

8. The process of Claim 7 in which said titanate represented by the empirical formula

$$(R^1O)_4Ti$$

is tetraisopropyl titanate.

9. The process of Claim 8 wherein tetraisopropyl titanate is reacted with 2,4-pentanedione, all or part of the isopropanol thereby generated is removed from the reaction product and one or more of the alcohols represented by the empirical formula

$$R^3OH$$

is added to the reaction product.

10. The process of Claim 9 wherein the titanate:pentanedione mol ratio is 1:2, all or part of the isopropanol thereby generated is removed by distillation and a mixture of methanol and n-butanol is added in a quantity sufficient to replace the isopropanol which has been removed.

11. The process of Claim 7 wherein an alcohol represented by the empirical formula

$$R^1OH,$$

generated in the reaction of 2,4-pentanedione and the titanate represented by the empirical formula

$$(R^1O)_4Ti,$$

is removed prior to the introduction of at least one alcohol represented by the empirical formula

$$R^3OH.$$

12. The process of Claim 7 wherein the alcohol represented by the empirical formula

$$R^1OH$$

has a lower boiling point than the alcohol represented by the empirical formula

$$R^3OH$$

and the alcohol represented by the empirical formula

$$R^1OH$$

is removed after completion of the reaction of said pentanedione, said titanate and said alcohol represented by the empirical formula

$$R^3OH.$$

**Patentansprüche**

1. Zusammensetzung, umfassend ein Reaktionsprodukt mit erniedrigtem Gefrierpunkt, erhalten durch Zusammenfügen (i) eines Titanats der empirischen Formel

$$(R^1O)_4Ti$$

mit (ii) 2,4-Pentandion und (iii) einer Verbindung bestehend aus entweder

(a) mindestens einem weiteren Titanat der empirischen Formel

$$(R^2O)_4Ti$$

oder

(b) mindestens einem Alkohol der empirischen Formel

$$R^3OH,$$

in welchem das Molverhältnis von Titanat/Pentandion im Bereich zwischen 1:1 und 1:2 liegt, wobei $R^2$ und $R^3$ von $R^1$ verschieden sind und

$R^1$, $R^2$ und $R^3$ jeweils Methyl, Ethyl, 2-Chlorethyl, Isopropyl, n-Propyl, n-Butyl, n-Pentyl, 2-Pentyl, 3-Methylbutyl, 2-Methoxyethyl oder Methoxyethoxyethyl bedeuten.

2. Zusammensetzung nach Anspruch 1, in welcher das Titanat der empirischen Formel

$$(R^1O)_4Ti$$

Tetraisopropyltitanat ist.

3. Zusammensetzung nach den Ansprüchen 1 oder 2, in welcher die Verbindung der empirischen Formel

$$R^3OH$$

Methanol, Ethanol, n-Butanol oder eine Mischung von Methanol und n-Butanol umfaßt.

4. Zusammensetzung nach den Ansprüchen 1 bis 3, welche Methoxy-, Isopropoxy- und n-Butoxy-Substituenten in den molaren Anteilen enthält, wie sie durch die Fläche UVWXYZ der Zeichnung definiert sind.

5. Zusammensetzung nach Anspruch 4, welche etwa 51 Mol-% Isopropoxy, etwa 15 Mol-% n-Butoxy und etwa 34 Mol-% Methoxy-Substituenten enthält.

6. Zusammensetzung nach Anspruch 1, in welcher das Molverhältnis von $(R^1O)_4Ti$ zu 2,4-Pentandion 1:2 beträgt.

7. Verfahren zur Herstellung des Umsetzungsprodukts von Anspruch 1, umfassend die Umsetzung von (i) eines Titanats der empirischen Formel

$$(R^1O)_4Ti$$

mit (ii) 2,4-Pentandion und (iii) einer Verbindung bestehend entweder aus

(a) mindestens einem weiteren Titanat der empirischen Formel

$$(R^2O)_4Ti$$

oder

(b) mindestens einem Alkohol der empirischen Formel

$$R^3OH$$

in welchem das Molverhältnis von Titanat zu Pentandion im Bereich von 1:1 und 1:2 liegt, wobei

$R^2$ und $R^3$ von $R^1$ verschieden sind und

$R^1$, $R^2$ und $R^3$ jeweils Methyl, Ethyl, 2-Chlorethyl, Isopropyl, n-Propyl, n-Butyl, n-Pentyl, 2-Pentyl, 3-Methylbutyl, 2-Methoxyethyl oder Methoxyethoxyethyl bedeuten.

8. Verfahren nach Anspruch 7, bei welchem das Titanat der empirischen Formel

$$(R^1O)_4Ti$$

Tetraisopropyltitanat ist.

9. Verfahren nach Anspruch 8, bei welchem Tetraisopropyltitanat mit 2,4-Pentandion umgesetzt wird, das gesamte oder ein Teil des dabei gebildeten Isopropanols aus dem Reaktionsprodukt entfernt wird und einer oder mehrere der Alkohole der empirischen Formel

$$R^3OH$$

dem Reaktionsprodukt zugesetzt wird bzw. werden.

10. Verfahren nach Anspruch 9, bei welchem das Molverhältnis von Titanat zu Pentandion 1:2 beträgt, das gesamte oder ein Teil des dabei gebildeten Isopropanols durch Destillation entfernt wird und eine Mischung aus Methanol und n-Butanol in einer Menge zugesetzt wird, die ausreicht, um das entfernte Isopropanol zu ersetzen.

11. Verfahren nach Anspruch 7, bei welchem ein Alkohol der empirischen Formel

$$R^1OH,$$

welcher bei der Umsetzung von 2,4-Pentandion und dem Titanat der empirischen Formel

$$(R^1O)_4Ti$$

gebildet wird, vor dem Zufügen des mindestens einen Alkohols der empirischen Formel

$$R^3OH$$

entfernt wird.

12. Verfahren nach Anspruch 7, bei welchem der Alkohol der empirischen Formel

$$R^1OH$$

einen niedrigeren Siedepunkt als der Alkohol der empirischen Formel

$$R^3OH$$

hat, und der Alkohol der empirischen Formel

$$R^1OH$$

nach Beendigung der Reaktion des Pentandions, Titanats und Alkohols der empirischen Formel

$$R^3OH$$

entfernt wird.

**Revendications**

1. Une composition comprenant un produit de réaction d'un point de congélation abaissé obtenu en combinant (i) un titanate représenté par la formule empirique

$$(R^1O)_4Ti$$

avec (ii) de la 2,4-pentanedione et (iii) une substance qui est soit

(a) au moins un autre titanate représenté par la formule empirique

$$(R^2O)_4Ti$$

soit

(b) au moins un alcool représenté par la formule empirique

$$R^3OH$$

où le rapport molaire titanate:pentanedione est compris entre 1:1 et 1:2;

$R^2$ et $R^3$ sont différents de $R^1$; et

$R^1$, $R^2$ et $R^3$ sont chacun un groupe méthyle, éthyle, 2-chloroéthyle, isopropyle, n-propyle, n-butyle, n-pentyle, 2-pentyle, 3-méthylbutyle, 2-méthoxyéthyle ou méthoxyéthoxyéthyle.

2. La composition selon la revendication 1, dans laquelle le titanate représenté par la formule empirique

$$(R^1O)_4Ti$$

est le titanate de tétra-isopropyle.

3. La composition selon la revendication 1 ou 2 dans laquelle la substance de la formule empirique

$$R^3OH$$

comprend du méthanol, de l'éthanol, du n-butanol ou un mélange de méthanol et de n-butanol.

4. Les compositions des revendications 1 à 3 contenant des substituents méthoxy, isopropoxy et n-butoxy dans les proportions molaires définies par la zone UVWXYZ sur la figure.

5. La composition selon la revendication 4, qui contient environ 51 moles % de substituants isopropoxy, environ 15 moles % de substituants n-butoxy et environ 34 moles % de substituants méthoxy.

6. La composition selon la revendication 1, dans laquelle le rapport molaire $(R^1O)_4Ti$:2,4-pentanedione est de 1:2.

7. Le procédé de préparation du produit de réaction de la revendication 1, selon lequel on fait réagir (i) un titanate représenté par la formule empirique

$$(R^1O)_4Ti$$

avec (ii) de la 2,4-pentanedione et (iii) une substance qui est soit

(a) au moins un autre titanate représenté par la formule empirique

$$(R^2O)_4Ti$$

soit

(b) au moins un alcool représenté par la formule empirique

$$R^3OH$$

où le rapport molaire titanate:pentanedione est compris entre 1:1 et 1:2;

$R^2$ et $R^3$ sont différents de $R^1$; et

$R^1$, $R^2$ et $R^3$ sont chacun un groupe méthyle, éthyle, 2-chloroéthyle, isopropyle, n-propyle, n-butyle, n-pentyle, 2-pentyle, 3-méthylbutyle, 2-méthoxyéthyle ou méthoxyéthoxyéthyle.

8. Le procédé de la revendication 7, dans lequel le titanate représente par la formule empirique

$$(R^1O)_4Ti$$

est le titanate de tétra-isopropyle.

9. Le procédé de la revendication 8, dans lequel le titanate de tétra-isopropyle est mis à réagir avec de la 2,4-pentanedione, la totalité ou une partie de l'isopropanol ainsi produit est éliminée du produit de réaction et on ajoute au produit de réaction un ou plusieurs des alcools représentés par la formule empirique

$$R^3OH.$$

10. Le procédé de la revendication 9, dans lequel le rapport molaire titanate:pentanedione est de 1:2, la totalité ou une partie de l'isopropanol ainsi produit est éliminée par distillation et on ajoute un mélange de méthanol et de n-butanol en quantité suffisante pour remplacer l'isopropanol qui a été éliminé.

11. Le procédé de la revendication 7, dans lequel un alcool représenté par la formule empirique

$$R^1OH$$

produit dans la réaction de la 2,4-pentanedione et du titanate représenté par la formule empirique

$$(R^1O)_4Ti$$

est éliminé avant l'introduction d'au moins un alcool représenté par la formule empirique

$$R^3OH.$$

12. Le procédé de la revendication 7, dans lequel l'alcool représenté par la formule empirique

$$R^1OH$$

a un point d'ébullition situé plus bas que celui de l'alcool représente par la formule empirique

$$R^3OH$$

et l'alcool représenté par la formule empirique

$$R^1OH$$

est éliminé après achèvement de la réaction de la pentanedione, du titanate et de l'alcool représenté par la formule empirique

$$R^3OH.$$

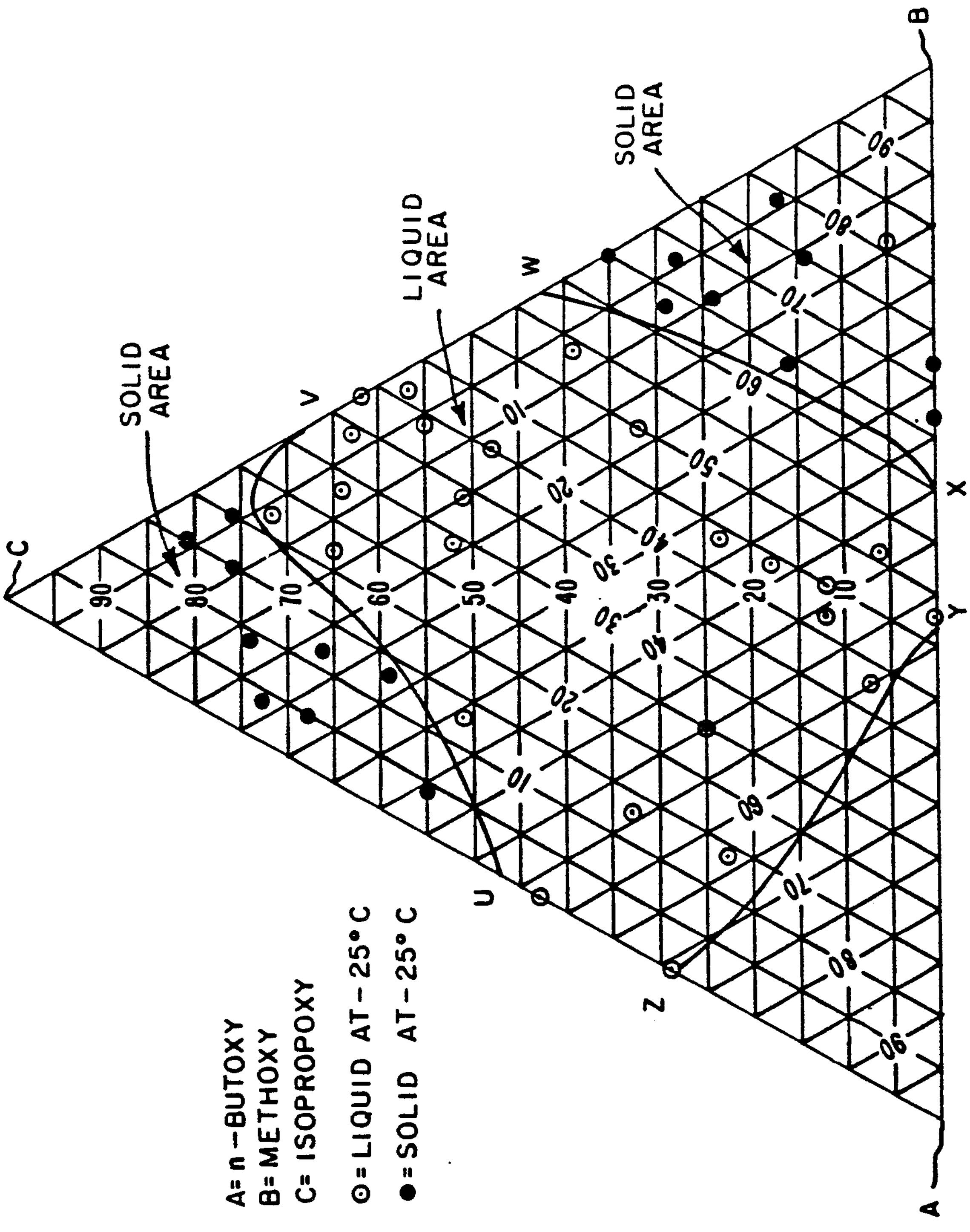
A= n –BUTOXY
B= METHOXY
C= ISOPROPOXY
⊙ = LIQUID AT – 25° C
● = SOLID AT – 25° C
SOLID AREA
LIQUID AREA
SOLID AREA
A
B
C
U
V
W
X
Y
Z